# EUROPEAN PATENT APPLICATION

(11) **EP 4 382 916 A1**
(43) Date of publication of application: **12.06.2024**
(21) Application number: 22839984.6
(22) Date of filing: 07.06.2022
(51) Int. Cl.: G01N 35/00

(54) **AUTOMATED ANALYSIS DEVICE**

(30) Priority: 15.07.2021 JP 2021117132
(71) Applicant: HITACHI HIGH-TECH CORPORATION, Tokyo 105-6409 (JP)
(72) Inventor: FUNAKOSHI, Sunao, Tokyo 100-8280 (JP); OKUSA, Takenori, Tokyo 105-6409 (JP); YOKOYAMA, Koki, Tokyo 105-6409 (JP)
(74) Representative: Manitz Finsterwald Patent- und Rechtsanwaltspartnerschaft mbB
(86) International application number: PCT/JP2022/022891
(87) International publication number: WO 2023/286494

(57) **Abstract**

The present disclosure proposes, in order to increase a liquid temperature in a reaction tank to a predetermined temperature in a short time without increasing a capacity of a heater, an automatic analyzer including: the reaction tank configured to hold a liquid in which a reaction vessel configured to contain a reaction liquid is to be immersed; a pump configured to circulate the liquid and supply the liquid to the reaction tank; the heater configured to heat the liquid; a Peltier element configured to heat and cool the liquid; a first temperature sensor configured to detect a temperature of the liquid; and a control device configured to control an output of the heater and an output of the Peltier element based on the temperature detected by the first temperature sensor (see FIG. 1).

## Description

### Technical Field

The present disclosure relates to an automatic analyzer.

### Background Art

In an automatic analyzer that analyzes a target component by mixing a sample and a reagent in a reaction vessel and measuring optical characteristics of a reaction liquid, it is necessary to accurately control a temperature of a liquid in which the reaction vessel is immersed in order to maintain measurement accuracy.

PTL 1 discloses an automatic analyzer having a configuration in which "a reaction vessel 2 attached on a circumference of a circular reaction disc 1 is immersed into a liquid held by a circular reaction tank 3. The liquid in the reaction tank is constantly circulated by a circulation pump 6 disposed between a discharge pipe 4 and a supply pipe 5. A temperature of the liquid is controlled through ON/OFF control by a heater 7 to maintain a reaction liquid held in the reaction vessel 2 at an optimal temperature for reaction (for example, 37 °C). The liquid in the reaction tank may be water or any other solution. A cooling unit 8 may be provided for cooling the liquid if the liquid temperature in the reaction tank rises too much." (see paragraph 0015 in PTL 1)

### Citation List

### Patent Literature

PTL 1: JP2009-204445A

### Summary of Invention

### Technical Problem

Since the cooling unit disclosed in PTL 1 has only a cooling function, when an ambient temperature is low in winter or the like, it takes a long time until a liquid temperature of the reaction tank reaches a predetermined temperature. In order to quickly increase the liquid temperature, it is necessary to increase a capacity of the heater.

Therefore, the present disclosure provides a technique for increasing a liquid temperature of a reaction tank to a predetermined temperature in a short time without increasing a capacity of a heater.

### Solution to Problem

In order to solve the above problems, an automatic analyzer in the present disclosure includes: a reaction tank configured to hold a liquid in which a reaction vessel configured to contain a reaction liquid is to be immersed; a pump configured to circulate the liquid and supply the liquid to the reaction tank; a heater configured to heat the liquid; a Peltier element configured to heat and cool the liquid; a first temperature sensor configured to detect a temperature of the liquid; and a control device configured to control an output of the heater and an output of the Peltier element based on the temperature detected by the first temperature sensor.

Additional features related to the present disclosure will be clarified based on the description of the present description and the accompanying drawings. Aspects of the present disclosure may be achieved and implemented using elements, combinations of various elements, the following detailed description, and accompanying claims. The description of the present description is merely a typical example, and does not limit the scope of the claims or application examples of the present disclosure in any sense.

### Advantageous Effects of Invention

According to the technique of the present disclosure, a liquid temperature of the reaction tank can be increased to a predetermined temperature in a short time without increasing a capacity of the heater. Problems, configurations, and effects other than those described above will be clarified by the description of the following embodiments.

### Brief Description of Drawings

[FIG. 1] FIG. 1 is a schematic diagram showing a configuration in the vicinity of a reaction tank in an automatic analyzer in a first embodiment.
[FIG. 2] FIG. 2 is a cross-sectional view of a Peltier unit.
[FIG. 3] FIG. 3 is a cross-sectional view showing a configuration example of a liquid jacket.
[FIG. 4] FIG. 4 is a cross-sectional view of another configuration example of the liquid jacket.
[FIG. 5] FIG. 5 is a cross-sectional view showing a configuration example of a heater.
[FIG. 6A] FIG. 6A is a diagram showing an operation pattern of a cooling unit (refrigerator) and a heater in an example in the related art (PTL 1).
[FIG. 6B] FIG. 6B is a diagram showing an operation pattern of a Peltier element and the heater in the first embodiment.
[FIG. 7] FIG. 7 is a diagram showing another example of the operation pattern of the Peltier element and the heater in the first embodiment.
[FIG. 8] FIG. 8 is a flowchart showing a method of controlling a temperature of circulating water executed by a control device.
[FIG. 9] FIG. 9 is a diagram showing a method of setting an operation rate of the Peltier element when activating the automatic analyzer.
[FIG. 10] FIG. 10 is a graph schematically showing changes in water temperature in an operation method according to an example in the related art and an operation method according to the present embodiment.
[FIG. 11] FIG. 11 is a diagram showing a method of setting an operation rate of a Peltier element in a second embodiment.
[FIG. 12] FIG. 12 is a diagram showing a method of setting an operation rate of a Peltier element according to a modification of the second embodiment.
[FIG. 13] FIG. 13 is a diagram showing a method of setting an operation rate of a Peltier element in a third embodiment.
[FIG. 14] FIG. 14 is a schematic diagram showing a configuration in the vicinity of a reaction tank in an automatic analyzer in a fourth embodiment.
[FIG. 15] FIG. 15 is a diagram showing a method of setting an operation rate of a Peltier element in the fourth embodiment.
[FIG. 16] FIG. 16 is a diagram showing a method of setting an operation rate of a Peltier element according to a modification of the fourth embodiment.
[FIG. 17] FIG. 17 is a schematic diagram showing a configuration in the vicinity of a reaction tank in an automatic analyzer in a fifth embodiment.
[FIG. 18] FIG. 18 is a diagram showing a method of setting an operation rate of a Peltier element in the fifth embodiment.
[FIG. 19] FIG. 19 is a diagram showing a method of setting an operation rate of a Peltier element according to a modification of the fifth embodiment.
[FIG. 20] FIG. 20 is a schematic diagram showing a configuration in the vicinity of a reaction tank in an automatic analyzer in a sixth embodiment.
[FIG. 21] FIG. 21 is a schematic diagram showing a configuration in the vicinity of a reaction tank in an automatic analyzer in a seventh embodiment.
[FIG. 22] FIG. 22 is a cross-sectional view showing a configuration example of a radiator in the seventh embodiment.
[FIG. 23] FIG. 23 is a schematic diagram showing another configuration example of the radiator.
[FIG. 24] FIG. 24 is a schematic diagram showing a configuration in the vicinity of a reaction tank in an automatic analyzer in an eighth embodiment.
[FIG. 25] FIG. 25 is a schematic diagram showing a configuration in the vicinity of a reaction tank in an automatic analyzer in a ninth embodiment.

### Description of Embodiments

### [First Embodiment]

### <Configuration Example of Vicinity of Reaction Tank of Automatic Analyzer>

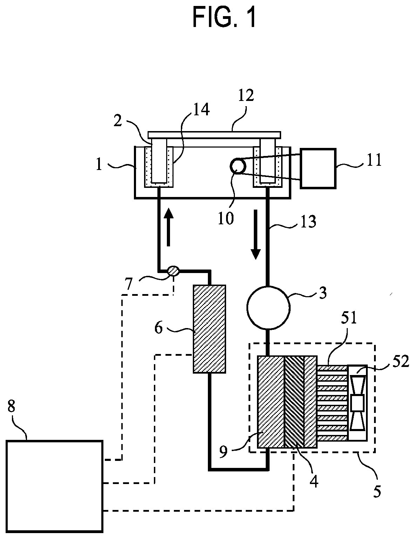

FIG. 1 is a schematic diagram showing a configuration in the vicinity of a reaction tank 1 in an automatic analyzer according to a first embodiment. The automatic analyzer includes the reaction tank 1, a pump 3, a Peltier unit 5, a heater 6, a temperature sensor 7, a control device 8, a light source 10, a photometer 11, a disc 12, and a tube 13.

FIG. 1 shows a vertical cross-sectional view of the reaction tank 1. The reaction tank 1 has a substantially circular shape in a top view. A thermostatic water tank 14 is provided inside the reaction tank 1. The reaction tank 1 is of a water circulation type in which circulating water circulates inside the thermostatic water tank 14.

The disc 12 has a substantially circular shape in the top view, and is configured to hold a plurality of reaction vessels 2. The reaction vessel 2 contains a reaction liquid in which a biological sample such as blood or urine and a reagent are mixed. The reaction vessel 2 is immersed in the thermostatic water tank 14.

The pump 3 circulates the circulating water to the reaction tank 1. The circulating water discharged from the reaction tank 1 is cooled or heated in the Peltier unit 5, heated in the heater 6, reaches the reaction tank 1, and returns from the reaction tank 1 to the pump 3. The tube 13 connects the above components through which the circulating water flows. The temperature sensor 7 is disposed downstream of the heater 6, detects a temperature of the circulating water introduced into the reaction tank 1, and outputs a detection signal of the temperature to the control device 8.

The control device 8 is a computer device such as a general-purpose computer, a smartphone, or a tablet terminal. Although not illustrated, the control device 8 includes a processor that executes processing described in the present description, a memory that temporarily stores a program executed by the processor and other necessary data, a storage device that stores the program, and an input and output device.

The control device 8 controls an input to the Peltier unit 5 and an input to the heater 6 such that a temperature detected by the temperature sensor 7 becomes a target temperature. Thus, in the present embodiment, the heater 6 is disposed downstream of the Peltier unit 5, and a temperature of circulating water passing through the heater 6 is detected by the temperature sensor 7. Such a configuration is advantageous when the temperature of the circulating water supplied to the reaction tank 1 is adjusted mainly by the heater 6.

The Peltier unit 5 includes a Peltier element 4, a liquid jacket 9, fins 51, and a fan 52. A detailed configuration of the Peltier unit 5 will be described later.

The light source 10 is disposed inside the reaction tank 1 and irradiates the reaction vessel 2 with light. The photometer 11 measures absorbance of light passing through the reaction vessel, and outputs a measurement signal to the control device 8 or another arithmetic device. The control device 8 or the other arithmetic device performs a qualitative and quantitative analysis on a specific component in the biological sample based on the measurement signal received from the photometer 11. Since a temperature of the reaction liquid affects analysis accuracy, it is necessary to control a water temperature in the thermostatic water tank 14 in which the reaction vessel 2 is immersed to a constant temperature.

### <Configuration Example of Peltier Unit>

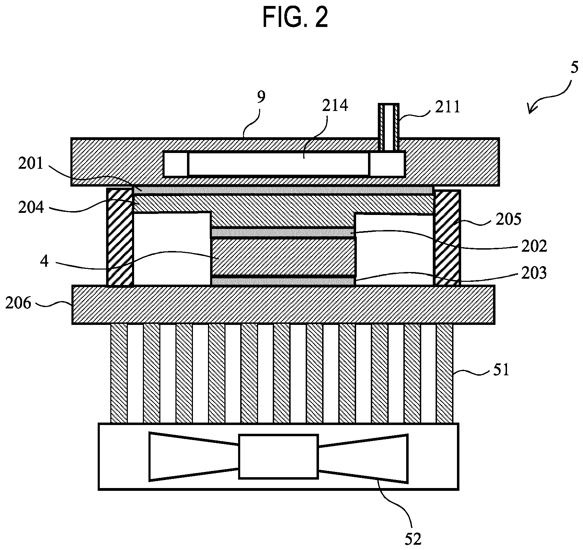

FIG. 2 is a cross-sectional view of the Peltier unit 5. As shown in FIG. 2, the Peltier unit 5 includes the Peltier element 4, thermal interfaces 201 to 203 such as grease, a heat spreader 204, a case 205 made of, for example, a resin, the fins 51, a fin base 206, the fan 52, and a tube connector 211. The tube connector 211 connects the tube 13 (not shown in FIG. 2) and a flow path 214 in the liquid jacket 9.

When the circulating water is cooled, the Peltier element 4 is energized so that a temperature of a surface of the Peltier element 4 on a side of the liquid jacket 9 is low, and a temperature on a side of the fin base 206 is high. Heat of the circulating water flowing through the flow path 214 of the liquid jacket 9 is absorbed by the Peltier element 4 from the liquid jacket 9 via the thermal interface 201 and the heat spreader 204, so that the circulating water is cooled. On the other hand, an opposite side of the Peltier element 4 generates heat, and the heat is transferred from the fin base 206 to the fins 51 via the thermal interface 203, and is radiated to air sent between the fins 51 by the fan 52.

On the other hand, when the circulating water is heated, the Peltier element 4 is energized so that the temperature of the surface of the Peltier element 4 on the side of the liquid jacket 9 is high, and the temperature on the side of the fin base 206 is low. The surface of the Peltier element 4 on the side of the liquid jacket 9 generates heat, the heat is transferred to the liquid jacket 9, and the circulating water flowing through the flow path 214 is heated. The opposite side of the Peltier element 4 becomes a heat absorbing surface, and absorbs heat from the air flowing between the fins 51 through the fins 51 and the fin base 206. In the following description, an operation in which the Peltier element 4 cools the circulating water is referred to as a cooling operation, and an operation in which the Peltier element 4 heats the circulating water is referred to as a heating operation.

The liquid jacket 9, the heat spreader 204, the fins 51, and the fin base 206 can be made of metal such as stainless steel or aluminum. The case 205 can be formed of a heat insulating material such as a resin having heat insulating properties, which can further prevent heat conduction between the liquid jacket 9 and the fins 51, allowing for efficient cooling and heating of the circulating water in the liquid jacket 9.

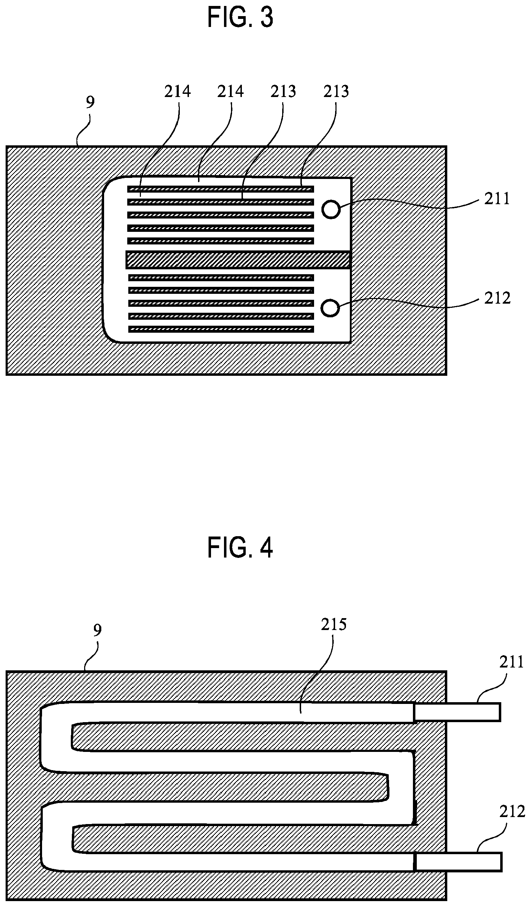

FIG. 3 is a cross-sectional view showing a configuration example of the liquid jacket 9. FIG. 3 shows a cross section in a direction orthogonal to a cross section in FIG. 2. As shown in FIG. 3, the flow path 214 in the liquid jacket 9 can be divided into a plurality of flow paths by a plurality of fins 213. The circulating water supplied from the tube connector 211 to the liquid jacket 9 flows through the flow path 214 between the fins 213 to absorb or radiate heat, and is discharged from a tube connector 212.

FIG. 4 is a cross-sectional view showing another configuration example of the liquid jacket 9. In the example in FIG. 4, a meandering flow path 215 is provided instead of the flow path 214. The circulating water supplied from the tube connector 211 to the liquid jacket absorbs or radiates heat while flowing through the meandering flow path 215, and is discharged from the tube connector 212.

### <Configuration Example of Heater>

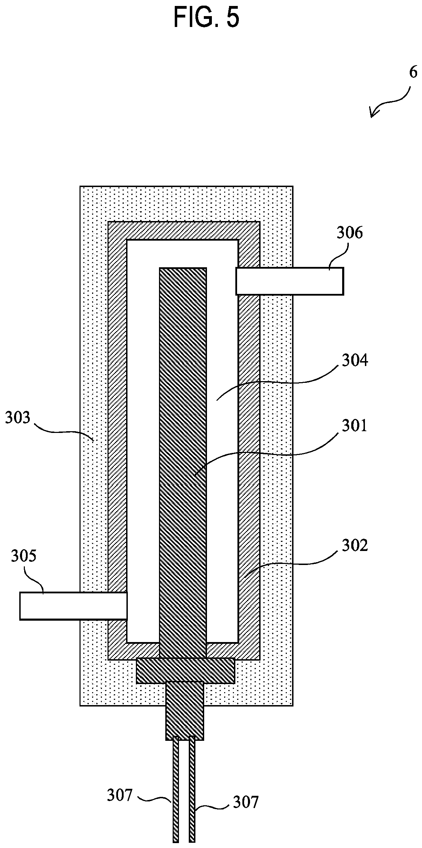

FIG. 5 is a cross-sectional view showing a configuration example of the heater 6. The heater 6 includes a sheath heater 301 serving as a heating unit, a water channel wall 302, a heat insulating material 303, a flow path 304, a tube connector 305, a tube connector 306, and a power cord 307.

The water channel wall 302 has a substantially cylindrical shape, and the linear sheath heater 301 is disposed in an internal space of the water channel wall 302, and the flow path 304 is defined. A joint between the sheath heater 301 and the water channel wall 302 is sealed to prevent the circulating water from leaking to an outside. The water channel wall 302 is covered with the heat insulating material 303. The power cord 307 connects the sheath heater 301 and power supply, and energization of the sheath heater 301 by the power supply is controlled by the control device 8. The sheath heater 301 is heated by being energized. The circulating water is supplied from the inlet tube connector 305, and is heated by the sheath heater 301 while passing through the flow path 304 and flowing to the outlet tube connector 306. A heating amount of the sheath heater 301 is controlled by adjusting an input from the power supply. A type of the sheath heater 301 may be either DC power supply or AC power supply. Methods of changing an input to the sheath heater 301 include changing a voltage of the power supply, changing an energization rate (operation rate) by switching the power supply at a constant voltage, and using a thyristor in the case of an alternating current.

### <Peltier Element and Operation Method of Heater>

Next, an operation pattern of the Peltier element 4 of the Peltier unit 5 and the heater 6 in the present embodiment will be described in comparison with an example in the related art.

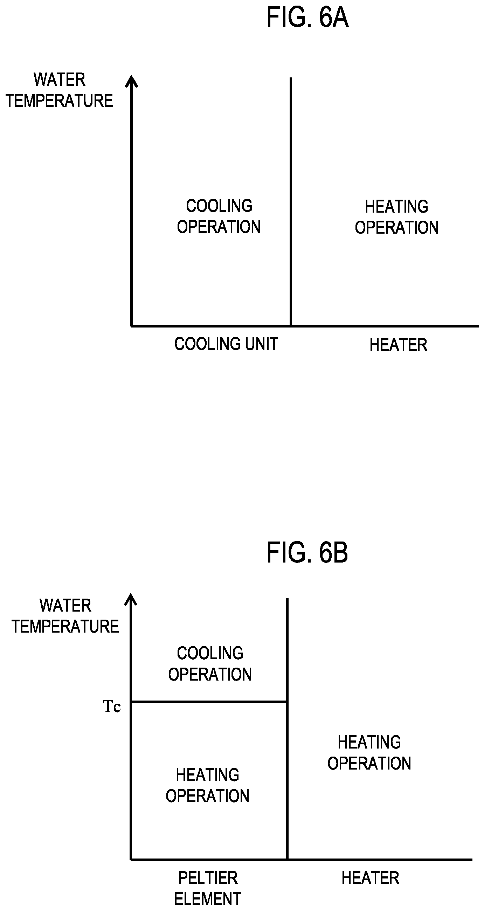

FIG. 6A is a diagram showing an operation pattern of a cooling unit (refrigerator) and a heater in an example in the related art (PTL 1). As shown in FIG. 6A, in the example in the related art, since the cooling unit can only perform a cooling operation, the cooling operation is always performed regardless of a water temperature of the circulating water. On the other hand, the heater is always in heating operation, but a heating amount applied to the circulating water is controlled by changing an input to the heater.

FIG. 6B is a diagram showing an operation pattern of the Peltier element 4 and the heater 6 in the present embodiment. In the present embodiment, when the water temperature detected by the temperature sensor 7 is lower than a predetermined operation switching temperature Tc, the control device 8 controls the Peltier element 4 to perform a heating operation of heating the surface on the side of the liquid jacket 9, and when the water temperature is equal to or higher than the operation switching temperature Tc, the control device 8 controls the Peltier element 4 to perform a cooling operation of cooling the surface on the side of the liquid jacket 9. The operation switching temperature Tc can be set lower than a target temperature of the circulating water.

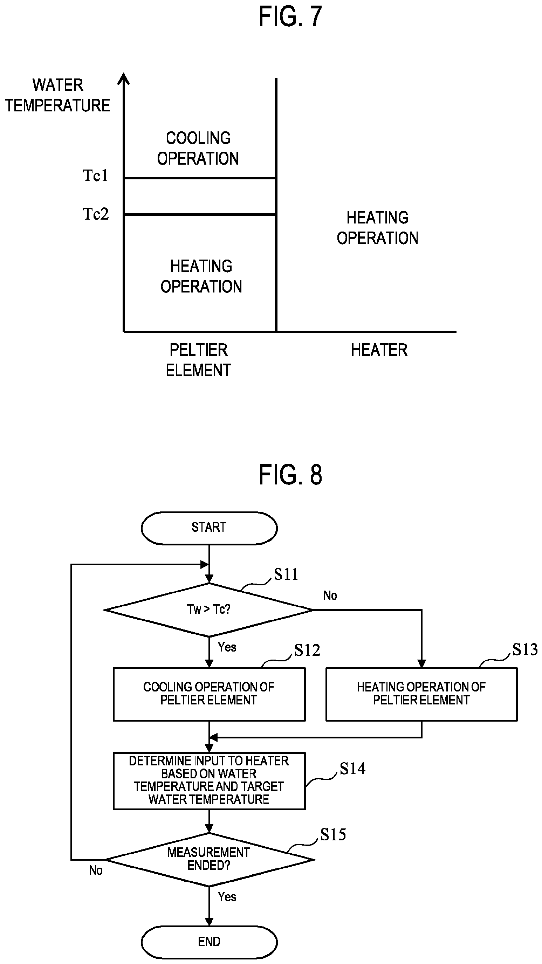

FIG. 7 is a diagram showing another example of the operation pattern of the Peltier element 4 and the heater 6 in the present embodiment. As shown in FIG. 7, instead of setting one operation switching temperature Tc, an operation switching temperature Tc1 when the water temperature increases and an operation switching temperature Tc2 when the water temperature decreases may be set to different temperatures to provide hysteresis. In this case, the control device 8 switches to the cooling operation when the temperature of the temperature sensor 7 becomes equal to or higher than the operation switching temperature Tc1 during the heating operation of the Peltier element 4, and switches to the heating operation when the temperature of the temperature sensor 7 becomes equal to or lower than the operation switching temperature Tc2 during the cooling operation of the Peltier element 4. A difference between the operation switching temperature Tc1 and the operation switching temperature Tc2 may be, for example, about 1°C. With such hysteresis, it is possible to prevent frequent switching between the heating operation and the cooling operation of the Peltier element 4.

FIG. 8 is a flowchart showing a method of controlling the temperature of circulating water executed by the control device 8. Upon receiving an input of an instruction to start activation of the automatic analyzer, the control device 8 executes processing shown in FIG. 8 in accordance with a program stored in a memory (not shown).

In step S11, the control device 8 determines whether a water temperature Tw detected by the temperature sensor 7 is higher than the operation switching temperature Tc. When the water temperature Tw is higher than the operation switching temperature Tc (Yes), the processing proceeds to step S12, and the control device 8 performs a cooling operation of the Peltier element 4. When the water temperature Tw is equal to or lower than the operation switching temperature Tc (No), the processing proceeds to step S13, and the control device 8 performs a heating operation on the Peltier element 4.

Next, in step S14, the control device 8 determines an input to the heater 6 according to the water temperature Tw and a predetermined target water temperature of the circulating water, and controls the water temperature by changing the input by PID control or the like.

Next, in step S15, the control device 8 determines whether measurement of the reaction liquid in the reaction vessel 2 is ended. When the measurement is ended (Yes), the processing is ended. When the measurement is not ended (No), the processing returns to step S11.

### <About Operation Rate of Peltier Element>

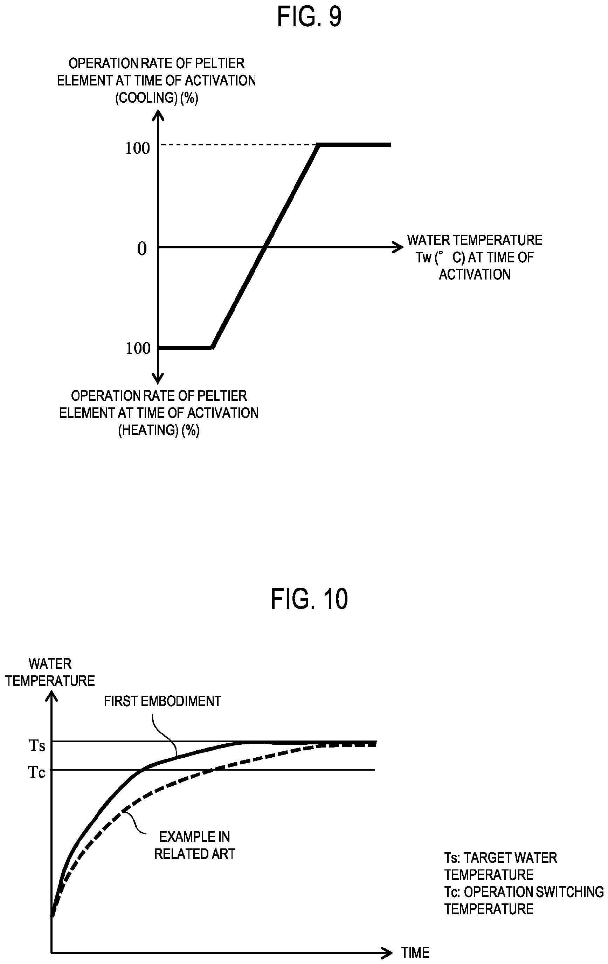

FIG. 9 is a diagram showing a method of setting an operation rate of the Peltier element 4 when activating the automatic analyzer. In FIG. 9, a vertical axis represents the operation rate of the Peltier element 4, a positive value represents an operation rate of the cooling operation, and a negative value represents an operation rate of the heating operation. A horizontal axis indicates the water temperature Tw detected by the temperature sensor 7 at the time of activation.

At the time of activation of the automatic analyzer, when the water temperature Tw detected by the temperature sensor 7 is equal to or lower than the operation switching temperature Tc, the Peltier element 4 may be always subjected to a heating operation at an operation rate of 100%. Alternatively, as shown in FIG. 9, an operating condition of the Peltier element 4 may be changed according to the water temperature Tw at the time of activation. As shown in FIG. 9, when the water temperature Tw at the time of activation is low, the Peltier element 4 is subjected to a heating operation, and when the water temperature Tw at the time of activation is high, the Peltier element 4 is subjected to a cooling operation, and furthermore, by changing the operation rate of the Peltier element 4 according to the water temperature Tw at the time of activation, the water temperature in the reaction tank 1 can be made to reach the target temperature more quickly. The water temperature Tw at the time of activation at which the operation rate of the Peltier element 4 becomes 0% can be set to, for example, equal to or lower than the operation switching temperature Tc. The water temperature Tw at which a heating operation rate of the Peltier element 4 is set to 100% and the water temperature Tw at which a cooling operation rate is set to 100% can be freely set in advance before shipment of the automatic analyzer, and is stored in the storage device of the control device 8.

The operation rate of the Peltier element 4 can be controlled by switching at a constant current and changing a ratio between ON and OFF. Instead of changing the operation rate, a capacity of the Peltier element 4 may be changed by changing a current flowing through the Peltier element 4.

FIG. 10 is a graph schematically showing changes in water temperature in an operation method according to an example in the related art and the operation method according to the present embodiment. As shown in FIG. 10, by performing a heating operation on the Peltier element 4 when the water temperature is equal to or lower than the operation switching temperature Tc as in the present embodiment, the water temperature can be made to reach a target temperature Ts faster than in the example in the related art, and the automatic analyzer can be quickly started up. In the example in the related art, when a capacity of the heater is increased in order to rapidly increase a liquid temperature, the heater becomes large, the device becomes large, and cost of the heater and the power supply increases. In contrast, according to the present embodiment, when there is an extra start-up time, a capacity of the heater 6 can be reduced, so that it is possible to reduce a size of the heater 6 and to reduce cost required for the heater 6.

### <Summary of First Embodiment>

As described above, the automatic analyzer in the present embodiment includes: the reaction tank 1 configured to hold circulating water (a liquid) in which the reaction vessel 2 configured to contain a reaction liquid is to be immersed; the pump 3 configured to circulate the circulating water and supply the circulating water to the reaction tank 1; the heater 6 configured to heat the circulating water; the Peltier element 4 configured to heat and cool the circulating water; the temperature sensor 7 configured to detect a temperature of the circulating water; and the control device 8 configured to control an output of the heater 6 and an output of the Peltier element 4 based on the temperature detected by the temperature sensor. Thus, by combining the heater 6 and the Peltier element 4 capable of heating and cooling, a total heating capacity of the circulating water can be improved without increasing the capacity of the heater 6. Therefore, even when an ambient air temperature is low, a liquid temperature of the reaction tank 1 can be increased to a predetermined temperature more quickly. For example, when the water temperature is increased to a certain extent, the water temperature of the circulating water can be stabilized by performing a cooling operation of the Peltier element 4.

### [Second Embodiment]

In the first embodiment described above, the operation rate of the Peltier element 4 is determined based on the water temperature of the circulating water when activating the automatic analyzer. In a second embodiment, a method of determining the operation rate of the Peltier element 4 when a water temperature of circulating water is stable will be proposed. Since a configuration of the automatic analyzer in the present embodiment is the same as that of the first embodiment, the description thereof will be omitted.

### <About Operation Rate of Peltier Element>

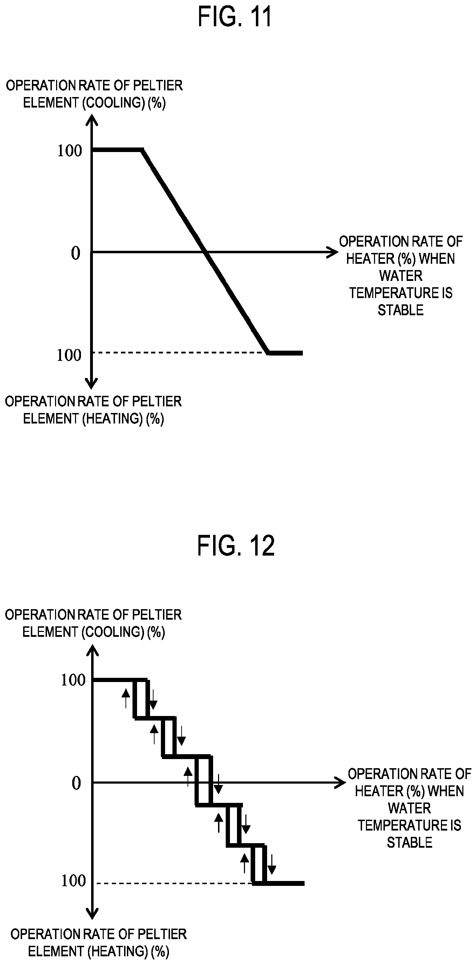

FIG. 11 is a diagram showing a method of setting the operation rate of the Peltier element 4 in the second embodiment. In FIG. 11, a vertical axis is similar as that in FIG. 9. A horizontal axis indicates an operation rate of the heater 6 in a state where the water temperature Tw detected by the temperature sensor 7 is stable after a certain amount of time elapses after the activation. In the present embodiment, as shown in FIG. 11, at a time point when the water temperature Tw detected by the temperature sensor 7 is stabilized to some extent, the control device 8 changes the operation rate of the Peltier element 4 according to the operation rate of the heater 6 or an input of the heater 6, and changes a cooling capacity and a heating capacity of the Peltier element 4. When the operation rate of the heater 6 is high, it is estimated that a heat load of the reaction tank 1 or the like, that is, a heat radiation amount is large, and as the operation rate of the heater 6 is high, the cooling capacity of the Peltier element 4 decreases, and when the operation rate of the heater 6 is high, the heating capacity of the Peltier element 4 increases. The operation rate of the heater 6 when the operation rate of the Peltier element 4 is 0% can be set to 50%, for example. The operation rate of the heater 6 at which a heating operation rate of the Peltier element 4 is set to 100% and the operation rate of the heater 6 at which a cooling operation rate is set to 100% can be freely set in advance before shipment of the automatic analyzer, and is stored in the storage device of the control device 8.

FIG. 12 is a diagram showing a method of setting the operation rate of the Peltier element 4 according to a modification of the second embodiment. In FIG. 11, the operation rate of the Peltier element 4 is linearly changed. In contrast, as shown in FIG. 12, the operation rate of the Peltier element 4 may be changed in a stepwise manner, and hysteresis may be provided when the operation rate of the heater 6 increases and decreases.

In order to avoid the operation from becoming unstable, the operation rate of the Peltier element 4 based on FIGS. 11 and 12 is not constantly changed, but may be performed at a certain time interval.

<Summary of Second Embodiment>

In an automatic analyzer in the example in the related art, a cooling unit performs a cooling operation regardless of a heat load that varies depending on an ambient air temperature, and thus power consumption of the heater tends to increase. In contrast, as in the present embodiment, by controlling the operation rate of the Peltier element 4 and the operation rate of the heater 6 according to the heat load, unnecessary cooling and heating are not performed, and power consumption can be reduced.

### [Third Embodiment]

### <About Operation Rate of Peltier Element>

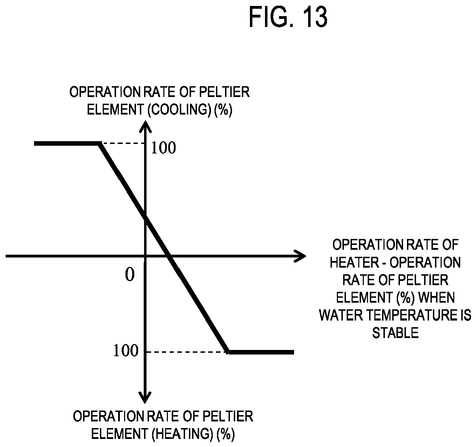

FIG. 13 is a diagram showing a method of setting the operation rate of the Peltier element 4 in a third embodiment. In FIG. 13, a vertical axis is similar as that in FIG. 9. A horizontal axis indicates a difference between an operation rate of the heater 6 and an operation rate of the Peltier element 4 in a state where the water temperature Tw detected by the temperature sensor 7 is stable after a certain amount of time elapses after activation. The difference between the operation rate of the heater 6 and the operation rate of the Peltier element 4 in a state where the water temperature Tw is stable is considered to represent a total heating amount at that time, that is, a heat load of the reaction tank 1 and the like. Therefore, the control device 8 changes the operation rate of the Peltier element 4 according to the difference between the operation rate of the heater 6 and the operation rate of the Peltier element 4. Actually, the operation rate of the heater 6 may be multiplied by a constant A, and the operation rate of the Peltier element 4 may be multiplied by a constant B, so that the horizontal axis in FIG. 13 may be defined as "A × operation rate of heater - B × operation rate of Peltier element".

FIG. 13 shows a graph when the operation rate of the heater 6 is higher than the operation rate of the Peltier element 4, but a line in the graph in FIG. 13 shifts according to a balance between the operation rate of the heater 6 and the operation rate of the Peltier element 4 (a balance between a capacity of the heater 6 and a capacity of the Peltier element 4).

In order to avoid the operation from becoming unstable, the operation rate of the Peltier element based on FIG. 13 is not constantly changed, but may be performed at a certain time interval.

### <Summary of Third Embodiment>

As described above, as in the present embodiment, by controlling the operation rate of the Peltier element 4 and the operation rate of the heater 6 according to the heat load, unnecessary cooling and heating are not performed, and power consumption can be reduced.

### [Fourth Embodiment]

### <Configuration Example of Vicinity of Reaction Tank of Automatic Analyzer>

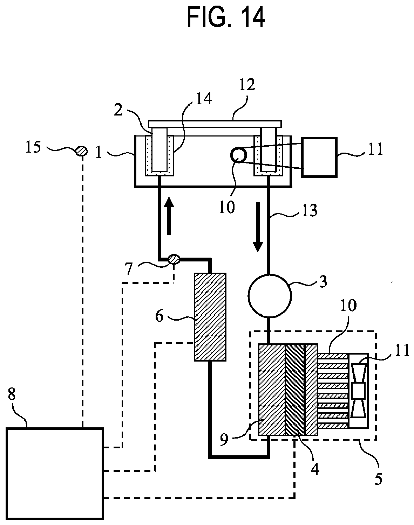

FIG. 14 is a schematic diagram showing a configuration in the vicinity of the reaction tank 1 in the automatic analyzer according to a fourth embodiment. The automatic analyzer in the present embodiment is different from the configuration of the first embodiment in that an air temperature sensor 15 configured to detect an ambient air temperature is further provided. The other configurations are similar as those in the first embodiment, and thus the description thereof will be omitted. The air temperature sensor 15 outputs a detection signal of an air temperature to the control device 8.

### <About Operation Rate of Peltier Element>

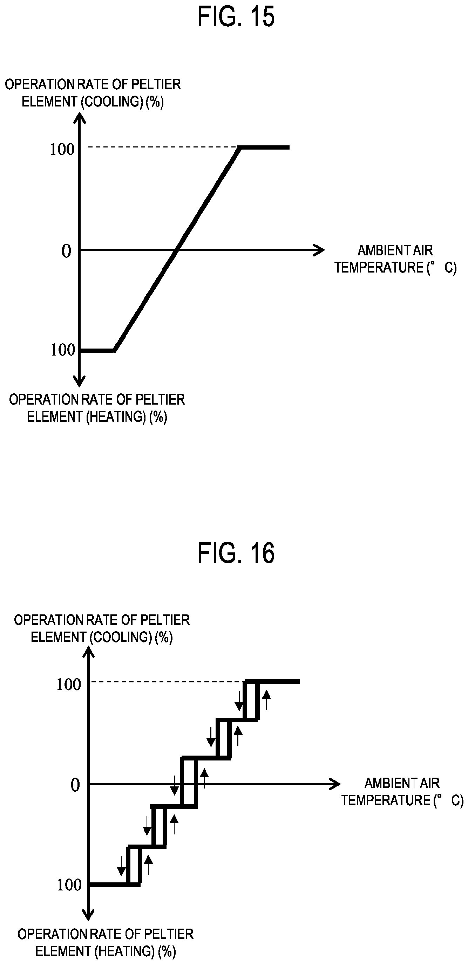

FIG. 15 is a diagram showing a method of setting the operation rate of the Peltier element in the present embodiment. In FIG. 15, a vertical axis is similar as that in FIG. 9. A horizontal axis indicates the ambient air temperature detected by the air temperature sensor 15. The lower an air temperature is, the larger a heat radiation amount from the reaction tank 1 or the like to surroundings, that is, the larger a heat load is. Therefore, in the present embodiment, the control device 8 performs a heating operation on the Peltier element 4 when the ambient air temperature detected by the air temperature sensor 15 is lower than a predetermined air temperature, and controls the operation rate of the Peltier element 4 such that the operation rate of the Peltier element 4 becomes higher as the ambient air temperature is lower. When the ambient air temperature detected by the air temperature sensor 15 is equal to or higher than a predetermined air temperature, a cooling operation of the Peltier element 4 is performed, and the operation rate of the Peltier element 4 becomes higher as the ambient air temperature is higher. The ambient air temperature (the above-described predetermined air temperature: the air temperature when switching between the heating operation and the cooling operation) at which the operation rate of the Peltier element 4 is 0% can be set to, for example, a temperature lower than a target temperature of the circulating water.

FIG. 16 is a diagram showing a method of setting the operation rate of the Peltier element 4 according to a modification of the fourth embodiment. In FIG. 15, the operation rate of the Peltier element 4 is linearly changed. In contrast, as shown in FIG. 16, the operation rate of the Peltier element 4 may be changed in a stepwise manner, and hysteresis may be provided when the operation rate of the heater 6 increases and decreases.

In order to avoid the operation from becoming unstable, the operation rate of the Peltier element 4 based on FIGS. 15 and 16 is not constantly changed, but may be performed at a certain time interval.

### <Summary of Fourth Embodiment>

As described above, as in the present embodiment, by controlling the operation rate of the Peltier element 4 and the operation rate of the heater 6 according to the heat load, unnecessary cooling and heating are not performed, and power consumption can be reduced.

### [Fifth Embodiment]

### <Configuration Example of Vicinity of Reaction Tank of Automatic Analyzer>

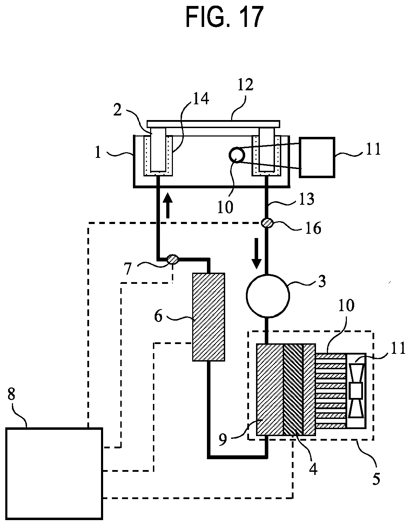

FIG. 17 is a schematic diagram showing a configuration in the vicinity of the reaction tank 1 in the automatic analyzer according to a fifth embodiment. The automatic analyzer in the present embodiment is different from the configuration of the first embodiment in that a temperature sensor 16 provided between the reaction tank 1 and the pump 3 and configured to detect a temperature of the circulating water is further provided. The temperature sensor 16 outputs a detection signal of the temperature of the circulating water to the control device 8.

### <About Operation Rate of Peltier Element>

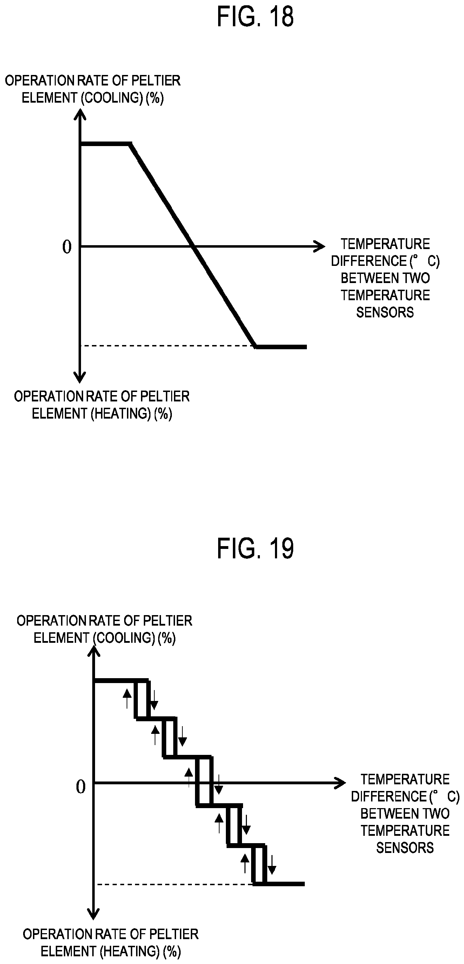

FIG. 18 is a diagram showing a method of setting the operation rate of the Peltier element in the present embodiment. In FIG. 18, a vertical axis is similar as that in FIG. 9. A horizontal axis indicates a difference between a water temperature detected by the temperature sensor 7 (a first temperature sensor) and a water temperature detected by the temperature sensor 16 (a second temperature sensor). The present embodiment utilizes the fact that the larger the heat radiation amount from the reaction tank 1 or the like, the larger the difference between the temperature detected by the temperature sensor 7 and the temperature detected by the temperature sensor 16. Specifically, when the difference between the temperature detected by the temperature sensor 7 and the temperature detected by the temperature sensor 16 is equal to or larger than a predetermined value, the control device 8 performs a heating operation on the Peltier element 4, and sets the operation rate to be higher as the temperature difference is larger. When the temperature difference between the two temperature sensors 7 and 16 is smaller than a predetermined value, the control device 8 performs a cooling operation of the Peltier element 4, and sets the operation rate of the Peltier element 4 to be higher as the temperature difference is smaller. The temperature difference between the two temperature sensors 7 and 16 when the operation rate of the Peltier element 4 is 0% (the above-described predetermined value: the air temperature when switching between the heating operation and the cooling operation) can be set to, for example, less than 1 °C.

FIG. 19 is a diagram showing a method of setting the operation rate of the Peltier element 4 according to a modification of the fifth embodiment. In FIG. 18, the operation rate of the Peltier unit is linearly changed. In contrast, as shown in FIG. 19, the operation rate of the Peltier element 4 may be changed in a stepwise manner, and hysteresis may be provided when the operation rate of the heater 6 increases and decreases.

In order to avoid the operation from becoming unstable, the operation rate of the Peltier element 4 based on FIGS. 18 and 19 is not constantly changed, but may be performed at a certain time interval.

### [Sixth Embodiment]

### <Configuration Example of Vicinity of Reaction Tank of Automatic Analyzer>

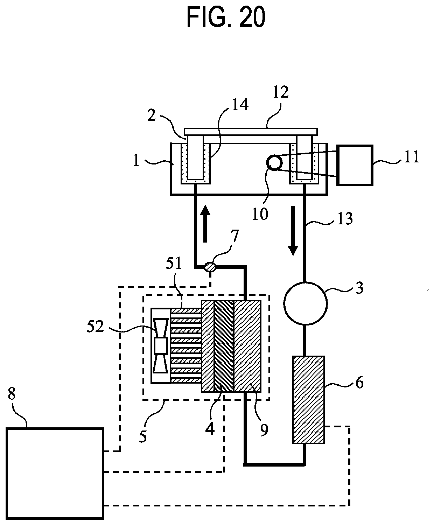

FIG. 20 is a schematic diagram showing a configuration in the vicinity of the reaction tank 1 in the automatic analyzer according to a sixth embodiment. The automatic analyzer in the present embodiment differs from the configuration of the first embodiment in that the Peltier unit 5 is disposed downstream of the heater 6. In the present embodiment, the control device 8 controls the cooling capacity or the heating capacity of the Peltier element 4 according to the water temperature Tw of the circulating water detected by the temperature sensor 7 and the target temperature. The cooling capacity or heating capacity of the Peltier element 4 is controlled by changing a voltage application direction and operation rate of the Peltier element 4.

More specifically, when the water temperature Tw detected by the temperature sensor 7 at the start of an operation is equal to or lower than a predetermined value, the control device 8 operates the heater 6 at a constant output, performs a heating operation on the Peltier element 4, and controls the heating capacity or the cooling capacity of the Peltier element 4 according to the water temperature Tw detected by the temperature sensor 7. During the operation of the heater 6, at a time point when a temperature of the temperature sensor 7 is stabilized, and when the operation rate of the Peltier element 4 is equal to or smaller than a predetermined value in a case where the Peltier element 4 is in a cooling operation or in a heating operation , the control device 8 stops the heater 6 and controls a temperature of the circulating water by the Peltier element 4.

### <Summary of Sixth Embodiment>

As described above, according to the present embodiment, when a heating load is small, the heater 6 is stopped and the temperature of the circulating water is controlled only by the Peltier element 4, thereby achieving a power-saving operation.

### [Seventh Embodiment]

### <Configuration Example of Vicinity of Reaction Tank of Automatic Analyzer>

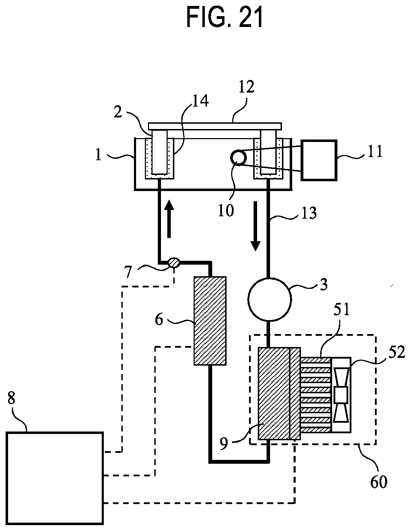

FIG. 21 is a schematic diagram showing a configuration in the vicinity of the reaction tank 1 in the automatic analyzer according to a seventh embodiment. The automatic analyzer in the present embodiment is different from the configuration of the first embodiment in that a radiator 60 is provided instead of the Peltier unit 5 and heat of the circulating water is radiated to the air by the radiator 60 to cool the circulating water.

The radiator 60 includes the liquid jacket 9, the fins 51, and the fan 52. A detailed configuration of the radiator 60 will be described later. An operation of the fan 52 of the radiator 60 is controlled by the control device 8.

### <Configuration Example of Radiator>

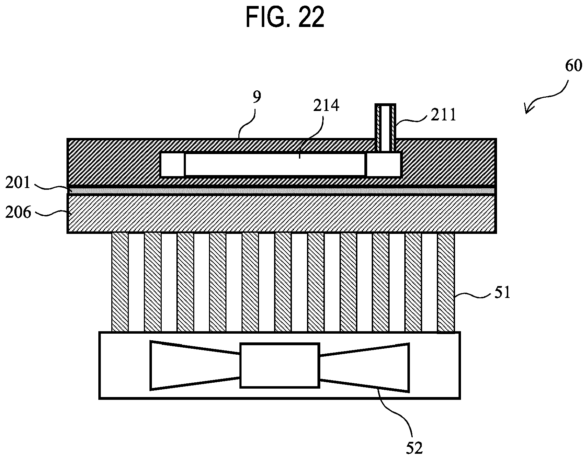

FIG. 22 is a cross-sectional view showing a configuration example of the radiator 60. The radiator 60 includes the liquid jacket 9, the fins 51, the fan 52, the thermal interface 201 such as grease, and the fin base 206. The liquid jacket 9 is connected to the fin base 206 via the thermal interface 201. Heat from the liquid jacket 9 is conducted from the fin base 206 to the fins 51 via the thermal interface 201. Heat is radiated from the fins 51 and the fin base 206 to the air flowing between the fins 51 by the fan 52. A structure of the liquid jacket 9 can be similar as a structure illustrated in the first embodiment (FIG. 3 or 4).

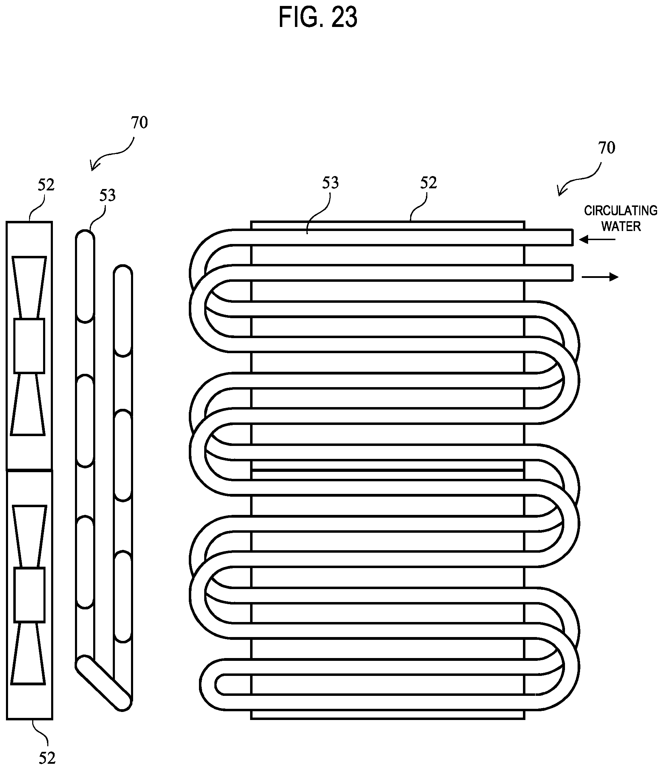

FIG. 23 is a schematic diagram showing a radiator 70 having another structure in a modification of the seventh embodiment. A left side of FIG. 23 shows the radiator 70 viewed from a first direction. A right side of FIG. 23 shows the radiator 70 viewed from a second direction orthogonal to the first direction. The radiator 70 includes a pipe 53 through which circulating water flows, instead of the liquid jacket 9, the fins 51, the thermal interface 201, and the fin base 206. The pipe 53 is connected to the tube 13 (not shown in FIG. 23). The pipe 53 may be made of metal such as stainless steel. The circulating water flows through the pipe 53, air is caused to flow around the pipe 53 by the fan 52, and heat of the circulating water is radiated from the pipe 53 to the air.

Although the fans 52 of the radiators 60 and 70 may be constantly operated, the following control may be performed. The control device 8 stops the fan 52 when the temperature detected by the temperature sensor 7 at the time of activation is lower than a predetermined value. Accordingly, the water temperature can quickly reach the target temperature. Further, the control device 8 stops the fan 52 when the operation rate of the heater 6 is equal to or more than a predetermined value in a state where the water temperature is stable. Accordingly, power consumption in a steady state can be reduced.

In the present embodiment, as in the second embodiment, an operation (cooling) and stop of the fan 52 may be controlled according to the operation rate of the heater 6 or the input of the heater 6. In this case, the control device 8 operates the fan 52 when the operation rate or an applied voltage of the heater 6 is smaller than a predetermined value, and stops the fan 52 when the operation rate or the applied voltage of the heater 6 is equal to or larger than the predetermined value.

### <Summary of Seventh Embodiment>

As described above, according to the present embodiment, it is possible to reduce cost by using a radiator having a relatively simple structure for cooling circulating water.

### [Eighth Embodiment]

### <Configuration Example of Vicinity of Reaction Tank of Automatic Analyzer>

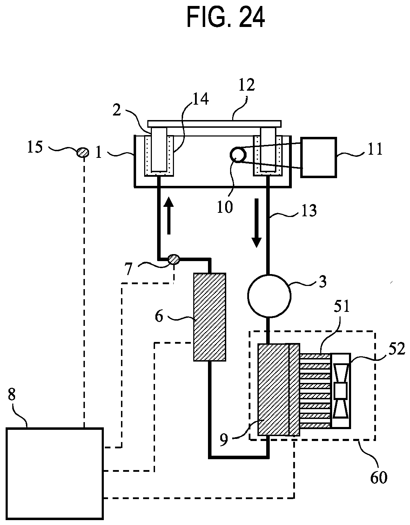

FIG. 24 is a schematic diagram showing a configuration in the vicinity of the reaction tank 1 in the automatic analyzer according to an eighth embodiment. The automatic analyzer in the present embodiment is different from a configuration of the seventh embodiment in that the air temperature sensor 15 configured to detect an ambient air temperature is further provided. The other configurations are similar as those in the seventh embodiment, and thus the description thereof will be omitted. The air temperature sensor 15 outputs a detection signal of an air temperature to the control device 8.

In the present embodiment, the control device 8 stops the fan 52 when the ambient air temperature detected by the air temperature sensor 15 is lower than a predetermined value, and operates the fan 52 when the ambient air temperature is equal to or higher than the predetermined value. The predetermined value for stopping the fan 52 may be, for example, a temperature lower than the target temperature of the circulating water. Accordingly, the water temperature can be made to reach the target temperature faster than that in the related art, and the automatic analyzer can be quickly started up.

### [Ninth Embodiment]

### <Configuration Example of Vicinity of Reaction Tank of Automatic Analyzer>

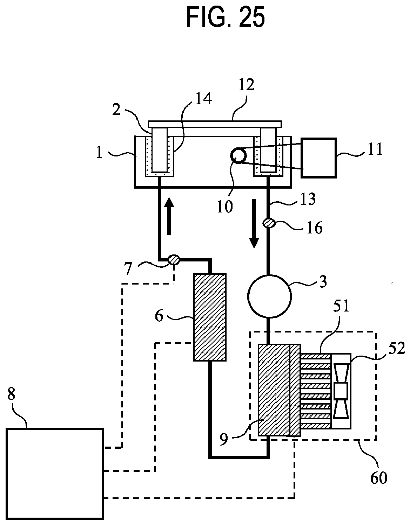

FIG. 25 is a schematic diagram showing a configuration in the vicinity of the reaction tank 1 in the automatic analyzer in the ninth embodiment. The automatic analyzer in the present embodiment is different from the configuration of the seventh embodiment in that the temperature sensor 16 provided between the reaction tank 1 and the pump 3 and configured to detect a temperature of the circulating water is further provided. The temperature sensor 16 outputs a detection signal of the temperature of the circulating water to the control device 8.

In the present embodiment, the control device 8 stops the fan 52 when the temperature detected by the temperature sensor 7 at the time of activation is lower than a predetermined value. Accordingly, the water temperature can quickly reach the target temperature. Further, the control device 8 stops the fan 52 when a temperature difference between the temperature sensor 7 and the temperature sensor 16 is equal to or larger than a predetermined value when the water temperature is stable. Accordingly, it is possible to reduce power consumption in a steady state.

### [Modification]

The present disclosure is not limited to the above-described embodiment, and includes various modifications. For example, the embodiments described above have been described in detail to facilitate understanding of the present disclosure, and it is not necessary to include all of the configurations described. A part of one embodiment can be replaced with a configuration of another embodiment. A configuration of another embodiment can be added to a configuration of one embodiment. A part of a configuration of each embodiment may be added, deleted, or replaced with a part of a configuration of another embodiment.

### Reference Signs List

1: reaction tank
2: reaction vessel
3: pump
4: Peltier element
5: Peltier unit
6: heater
7: temperature sensor
8: control device
9: liquid jacket
10: light source
11: photometer
12: disc
13: tube
14: thermostatic water tank
15: air temperature sensor
16: temperature sensor
51: fin
52: fan
53: pipe
201, 202, 203: thermal interface
204: heat spreader
205: case
206: fin base
211, 212: tube connector
213: fin
214: flow path
301: sheath heater
302: water channel wall
303: heat insulating material
304: flow path
305, 306: tube connector
307: power cord

## Claims

1. An automatic analyzer comprising:
a reaction tank configured to hold a liquid in which a reaction vessel configured to contain a reaction liquid is to be immersed;
a pump configured to circulate the liquid and supply the liquid to the reaction tank;
a heater configured to heat the liquid;
a Peltier element configured to heat and cool the liquid;
a first temperature sensor configured to detect a temperature of the liquid; and
a control device configured to control an output of the heater and an output of the Peltier element based on the temperature detected by the first temperature sensor.

2. The automatic analyzer according to claim 1, wherein
the control device controls the output of the Peltier element such that the Peltier element performs a heating operation of heating the liquid when the temperature detected by the first temperature sensor is lower than a predetermined temperature, and the Peltier element performs a cooling operation of cooling the liquid when the temperature detected by the first temperature sensor is equal to or higher than the predetermined temperature.

3. The automatic analyzer according to claim 2, wherein
the control device controls the output of the Peltier element such that, at the time of activation of the automatic analyzer, the Peltier element performs the heating operation when a temperature detected by the first temperature sensor is lower than the predetermined temperature, and the Peltier element performs the cooling operation when the temperature detected by the first temperature sensor is equal to or higher than the predetermined temperature.

4. The automatic analyzer according to claim 3, wherein
the control device
sets an operation rate or a current of the Peltier element at the time of activation of the automatic analyzer such that in the heating operation, the operation rate or the current of the Peltier element increases as a temperature detected by the first temperature sensor decreases, and
sets the operation rate or the current of the Peltier element at the time of activation of the automatic analyzer such that in the cooling operation, the operation rate or the current of the Peltier element increases as the temperature detected by the first temperature sensor increases.

5. The automatic analyzer according to claim 1, wherein
the control device
controls the output of the Peltier element such that the Peltier element performs a cooling operation of cooling the liquid when an operation rate or an applied voltage of the heater is smaller than a predetermined value, and the Peltier element performs a heating operation of heating the liquid when the operation rate or the applied voltage of the heater is equal to or larger than a predetermined value,
increases an operation rate or a current of the Peltier element as the operation rate or the applied voltage of the heater decreases in the cooling operation, and
increases the operation rate or the current of the Peltier element as the operation rate or the applied voltage of the heater increases in the heating operation.

6. The automatic analyzer according to claim 1, wherein
the control device
controls the output of the Peltier element such that the Peltier element performs a cooling operation of cooling the liquid when a difference between an operation rate of the heater and an operation rate of the Peltier element is smaller than a predetermined value, and the Peltier element performs a heating operation of heating the liquid when the difference between the operation rate of the heater and the operation rate of the Peltier element is equal to or larger than a predetermined value,
increases the operation rate of the Peltier element as the difference between the operation rate of the heater and the operation rate of the Peltier element decreases in the cooling operation, and
increases the operation rate of the Peltier element as the difference between the operation rate of the heater and the operation rate of the Peltier element increases in the heating operation.

7. The automatic analyzer according to claim 1, further comprising:
an air temperature sensor configured to detect an ambient air temperature, wherein
the control device
controls the output of the Peltier element such that the Peltier element performs a cooling operation of cooling the liquid when the air temperature detected by the air temperature sensor is equal to or higher than a predetermined air temperature, and the Peltier element performs a heating operation of heating the liquid when the air temperature detected by the air temperature sensor is lower than the predetermined air temperature,
increases an operation rate or a current of the Peltier element as the air temperature detected by the air temperature sensor increases in the cooling operation, and
increases the operation rate or the current of the Peltier element as the air temperature detected by the air temperature sensor decreases in the heating operation.

8. The automatic analyzer according to claim 1, further comprising:
a second temperature sensor disposed between the reaction tank and the pump and configured to detect a temperature of the liquid, wherein
the first temperature sensor is provided between the heater and the reaction tank,
the control device
controls the output of the Peltier element such that the Peltier element performs a cooling operation of cooling the liquid when a difference between the temperature detected by the first temperature sensor and the temperature detected by the second temperature sensor is smaller than a predetermined value, and the Peltier element performs a heating operation of heating the liquid when the difference between the temperature detected by the first temperature sensor and the temperature detected by the second temperature sensor is equal to or larger than the predetermined value,
increases an operation rate or a current of the Peltier element as the difference between the temperature detected by the first temperature sensor and the temperature detected by the second temperature sensor decreases in the cooling operation, and
increases the operation rate or the current of the Peltier element as the difference between the temperature detected by the first temperature sensor and the temperature detected by the second temperature sensor increases in the heating operation.

9. The automatic analyzer according to claim 1, wherein
the control device
changes the output of the Peltier element based on the temperature detected by the first temperature sensor and a set temperature of the liquid,
operates the heater when the temperature detected by the first temperature sensor is lower than a predetermined temperature at the time of activation of the automatic analyzer, and
during an operation of the heater, at a time point when the temperature detected by the first temperature sensor is stabilized, and when the output of the Peltier element is equal to or smaller than a predetermined value in a case where the Peltier element is in a cooling operation of cooling the liquid or in a case where the Peltier element performs a heating operation of heating the liquid, stops the heater.

10. An automatic analyzer comprising:
a reaction tank configured to hold a liquid in which a reaction vessel configured to contain a reaction liquid is to be immersed;
a pump configured to circulate the liquid and supply the liquid to the reaction tank;
a heater configured to heat the liquid;
a radiator configured to cool the liquid;
a fan configured to blow air to the radiator;
a first temperature sensor configured to detect a temperature of the liquid; and
a control device configured to control an output of the heater and an operation of the fan based on the temperature detected by the first temperature sensor.

11. The automatic analyzer according to claim 10, wherein
the control device operates the fan, at the time of activation of the automatic analyzer, when a temperature detected by the first temperature sensor is equal to or higher than a predetermined temperature, and stops the fan when the temperature detected by the first temperature sensor is lower than the predetermined temperature.

12. The automatic analyzer according to claim 10, wherein
the control device operates the fan when an operation rate or an applied voltage of the heater is smaller than a predetermined value, and stops the fan when the operation rate or the applied voltage of the heater is equal to or larger than the predetermined value.

13. The automatic analyzer according to claim 10, further comprising:
an air temperature sensor configured to detect an ambient air temperature, wherein
the control device operates the fan when the air temperature detected by the air temperature sensor is equal to or higher than a predetermined air temperature, and stops the fan when the air temperature detected by the air temperature sensor is lower than the predetermined air temperature.

14. The automatic analyzer according to claim 10, further comprising:
a second temperature sensor disposed between the reaction tank and the pump and configured to detect a temperature of the liquid, wherein
the first temperature sensor is provided between the heater and the reaction tank,
the control device
operates the fan when a difference between the temperature detected by the first temperature sensor and the temperature detected by the second temperature sensor is smaller than a predetermined value, and
stops the fan when the difference between the temperature detected by the first temperature sensor and the temperature detected by the second temperature sensor is equal to or larger than the predetermined value.
